# EUROPEAN PATENT APPLICATION

(11) **EP 4 210 404 A1**
(43) Date of publication of application: **12.07.2023**
(21) Application number: 22216867.6
(22) Date of filing: 28.12.2022
(51) Int. Cl.: H04W 60/04, H04W 84/06

(54) **HANDLING OF MULTIPLE TRACKING AREA IDENTIFIERS IN SATELLITE ACCESS**

(30) Priority: 10.01.2022 US 202263297840 P; 21.12.2022 US 202218086411
(71) Applicant: MediaTek Singapore Pte. Ltd., Singapore 138628 (SG)
(72) Inventor: NIEMI, Marko, Oulu (FI)
(74) Representative: Hoefer & Partner Patentanwälte mbB

(57) **Abstract**

Examples pertaining to handling of multiple tracking area identifiers, TAIs, in satellite access in mobile communications are described. A user equipment, UE, initiates a procedure with a satellite-accessing cell of a network (410). The UE constructs a TAI or a plurality of TAIs, as a list of TAIs, of the cell depending on whether the broadcasts one or more than one tracking area codes, TACs, per public land mobile network, PLMN, (420). The UE receives either a reject message or an accept message from the network responsive to initiating the procedure (430).

## Description

### CROSS REFERENCE TO RELATED PATENT APPLICATION(S)

The present disclosure is part of a non-provisional application claiming the priority benefit of U.S. Patent Application No. 63/297,840, filed 10 January 2022, the content of which herein being incorporated by reference in its entirety.

### TECHNICAL FIELD

The present disclosure is generally related to mobile communications and, more particularly, to handling of multiple tracking area identifiers (TAls) in satellite access in mobile communications.

### BACKGROUND

Unless otherwise indicated herein, approaches described in this section are not prior art to the claims listed below and are not admitted as prior art by inclusion in this section.

In wireless communications, including mobile communications in accordance with the 3^{rd} Generation Partnership Project (3GPP) specification(s) such as 5^{th} Generation (5G) New Radio (NR) and 4^{th} Generation (4G) Internet-of-Things (loT), a cell offering satellite access may indicate support for multiple tracking area codes (TACs) for a given public land mobile network (PLMN) while, in general, a TAI is a globally unique identifier comprising a PLMN identifier (ID) and one TAC. Accordingly, a user equipment (UE) and a core network need to have rules defined on how to cope with the situation in which a cell broadcasts more than one TAC per PLMN. For example, how to cope with TAI construction for an attach or tracking area update (TAU) procedure needs to be defined. As another example, the handling of a forbidden list in case that multiple TAIs are forbidden also needs to be defined. More, a situation in which a subset of broadcast TACs is forbidden while other TACs are suitable for the UE can be problematic. Therefore, there is a need for a solution of how to handle multiple TAIs in satellite access in mobile communications.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

One objective of the present disclosure is propose schemes, concepts, designs, systems, methods and apparatus pertaining to handling of multiple TAIs in satellite access in mobile communications. It is believed that the above-described issue would be avoided or otherwise alleviated by implementing one or more of the proposed schemes described herein. A method and an apparatus according to the invention are defined in the independent claims. The dependent claims define preferred embodiments thereof.

In one aspect, a method may involve a processor of an apparatus (e.g., UE) initiating a procedure with a satellite-accessing cell of a network. The method may also involve the processor constructing a TAI of the cell or a list of TAIs of the cell depending on whether the cell broadcasts one or more than one TACs per PLMN.

In another aspect, an apparatus may include a transceiver and a processor coupled to the transceiver. The transceiver may be configured to communicate wirelessly with a network. The processor may initiate, via the transceiver, a procedure with a satellite-accessing cell of the network. The processor may construct a TAI of the cell, considering this TAI also as a current TAI in an event that it is a TAI of the chosen PLMN, or a list of TAIs of the cell, considering the list of TAIs as list of current TAIs in case those are TAIs of the chosen PLMN, depending on whether the cell indicates support for more than one TACs per PLMN. The processor may also receive, via the transceiver, either a reject message or an accept message from the network responsive to initiating the procedure.

It is noteworthy that, although description provided herein may be in the context of certain radio access technologies, networks and network topologies such as 5^{th} Generation System (5GS) and 4G Evolved Packet System (EPS) mobile networking, the proposed concepts, schemes and any variation(s)/derivative(s) thereof may be implemented in, for and by other types of wireless and wired communication technologies, networks and network topologies such as, for example and without limitation, Ethernet, Universal Terrestrial Radio Access Network (UTRAN), Evolved UTRAN (E-UTRAN), Global System for Mobile communications (GSM), General Packet Radio Service (GPRS)/Enhanced Data rates for Global Evolution (EDGE) Radio Access Network (GERAN), Long-Term Evolution (LTE), LTE-Advanced, LTE-Advanced Pro, Internet-of-Things (IoT), Industrial loT (IIoT), Narrow Band Internet of Things (NB-loT), and any future-developed networking technologies. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram of an example network environment in which various solutions and schemes in accordance with the present disclosure may be implemented.
FIG. 2 is a diagram of an example scenario of a conceptual summary of various proposed schemes in accordance with the present disclosure.
FIG. 3 is a block diagram of an example communication system in accordance with an implementation of the present disclosure.
FIG. 4 is a flowchart of an example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to handling of multiple TAIs in satellite access in mobile communications. According to the present disclosure, a number of possible solutions may be implemented separately or jointly. That is, although these possible solutions may be described below separately, two or more of these possible solutions may be implemented in one combination or another.

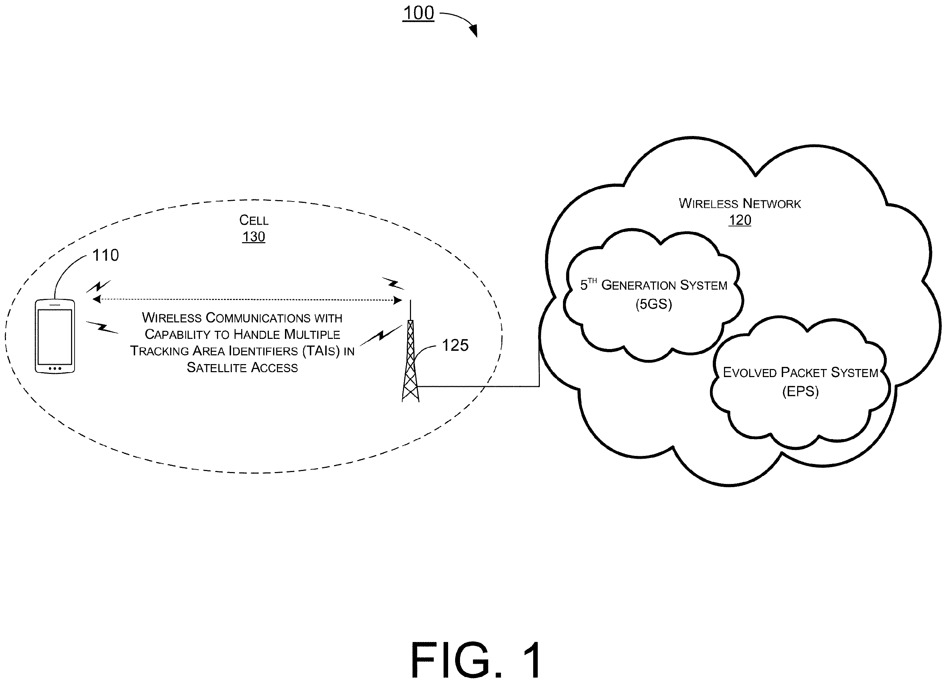

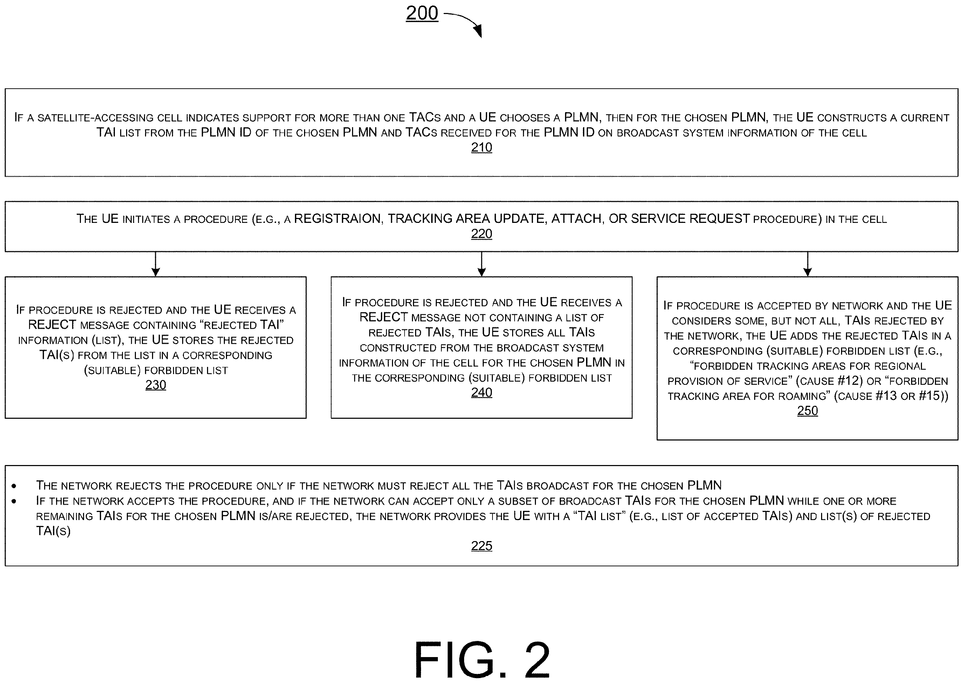

FIG. 1 illustrates an example network environment 100 in which various solutions and schemes in accordance with the present disclosure may be implemented. FIG. 2 ~ FIG. 4 illustrate examples of implementation of various proposed schemes in network environment 100 in accordance with the present disclosure. The following description of various proposed schemes is provided with reference to FIG. 1 ~ FIG. 4.

Referring to FIG. 1, network environment 100 may involve a UE 110 and a wireless network 120, which may include a 5^{th} Generation System (5GS) (and, optionally, an EPS). Depending on channel condition, availability and/or other factor(s), UE 110 may be in wireless communication with wireless network 120 via one or more terrestrial network nodes (e.g., base station(s) such as eNB, gNB and/or transmission/reception point (TRP)) and/or one or more non-terrestrial network nodes (e.g., satellite(s)). For simplicity in illustration and without limiting the scope of the present disclosure, UE 110 may be associated with or otherwise in communication with a cell 130 corresponding to a network node 125 of wireless network 120. In network environment 100, UE 110 and wireless network 120 may implement various schemes pertaining to handling of multiple TAIs in satellite access in mobile communications in accordance with the present disclosure, as described below. It is noteworthy that, while the various proposed schemes may be individually or separately described below, in actual implementations each of the proposed schemes may be utilized individually or separately. Alternatively, some or all of the proposed schemes may be utilized jointly.

Under a proposed scheme in accordance with the present disclosure, UE 110 may construct a TAI or a TAI list in a defined way when initiating a registration procedure, attach procedure, TAU procedure or service request procedure. Under the proposed scheme, in an event that cell 130 does not indicate support for more than one TAC for a chosen PLMN, UE 110 may construct a TAI of cell 130 from the PLMN ID of the chosen PLMN and a TAC received for the PLMN ID on broadcast system information from cell 130. For satellite access, in an even that cell 130 indicates support for more than one TACs for the PLMN ID, UE 110 may construct a TAI list of cell 130 from the PLMN ID of the chosen PLMN and TACs received from the PLMN ID on broadcast system information from cell 130.

Under a proposed scheme in accordance with the present disclosure, UE 110 may proceed differently when receiving a REJECT message and rejected TAIs, depending on whether a REJECT or ACCEPT message completing the procedure contains or does not contain certain information. In the context of satellite access, in an event that the REJECT message is received by UE 110 (e.g., with the EPS Mobility Management (EMM) cause #12 "tracking area not allowed", cause #13 "roaming not allowed in this tracking area", or cause #15 "no suitable cells in tracking area", the REJECT message may or may not contain certain information. For instance, the REJECT message may not contain "rejected TAl" information or the message may indicate all TACs for a PLMN ID of a chosen PLMN (e.g., the constructed list of TAls) may be stored in a suitable forbidden list (e.g., a forbidden list corresponding to the cause of rejection). Alternatively, the REJECT message may contain "rejected TAl" information (list), and those rejected TAIs (from the list) may be removed from the accepted list of TAIs and the rejected TAI may be stored in the suitable forbidden list. Alternatively, the TRACKING AREA UPDATE REJECT message may not contain "rejected TAl" information (lists), and the constructed list of TAIs (e.g., all TACs broadcast by cell 130 for the PLMN) may be stored in the suitable forbidden list.

Under the proposed scheme, in the context of satellite access, in an event that cell 130 indicates support for more than one TACs for the PLMN ID of the chosen PLMN and wireless network 120 can accept registration to one or more, but not all, TACs for the chosen PLMN, wireless network 120 may include an EMM cause information element (IE) indicating the reason of the rejection and a Rejected TAI list IE including those rejected TAIs and a new TAI list including TAIs where the registration was successful in a ACCEPT message.

Under the proposed scheme, in the context of satellite access, in an event that wireless network 120 indicates it can accept registration to one or more, but not all, TACs for the PLMN ID of the chosen PLMN, wireless network 120 may include an EMM cause IE indicating the reason of the rejection. Moreover, wireless network 120 may include a Rejected TAI list IE including those rejected TAIs and a new TAI list including TAIs where the registration was successful in a ACCEPT message. In case that UE 110 considers TAIs rejected, then UE 110 may add those TAls in a forbidden list corresponding to the cause of rejection (e.g., "forbidden tracking areas for regional provision of service" (cause #12), "forbidden tracking areas for roaming" (cause #13, #15)).

Under a proposed scheme in accordance with the present disclosure with respect to handling of multiple TAls at reception of an ACCEPT message, the proposed schemes described above for TAU may be applicable to any UE- or network-initiated EMM and/or 5^{th} Generation Mobility Management (5GMM) signaling procedures in case the network offers more than one TAC per PLMN (e.g., including attach (4G), registration (5G) and service request (4G and 5G) procedures).

Under a proposed scheme in accordance with the present disclosure with respect to handling of multiple TAIs at reception of a REJECT message, UE 110 may perform certain operations when UE 110 receives a reject message (e.g., TAU REJECT with cause #12). For instance, in an event that UE 110 is associating multiple TACs to the chosen PLMN (e.g., a list of TAls when, for satellite access, cell 130 broadcasts multiple TACs for the chosen PLMN), UE 110 may store a constructed current list of TAIs (e.g., the list constructed for a TAU procedure) in the list of "forbidden tracking areas for regional provision of service." In an event that a REJECT message is not integrity protected, UE 110 may memorize or store the current list of TAIs that was stored in the list of "forbidden tracking areas for regional provision of service" for non-integrity protected non-access stratum (NAS) reject messages. The same principle (but different forbidden list(s)) may be applicable in case UE 110 receives a REJECT message with cause #13 or #15 e.g., in case UE 110 receives a TAU REJECT, an ATTACH REJECT message, a REGISTRATION REJECT message or a SERVICE REJECT message with cause #13 or #15. It is noteworthy that an assumption under this proposed scheme is that wireless network 120 rejects a given procedure only if wireless network 120 must reject all the TAIs broadcast for the chosen PLMN. In an event that wireless network 120 can accept a subset of TAIs, while the remaining one or more TAIs is/are rejected, wireless network 120 may accept the procedure providing UE 110 with a "TAl list" (accepted) and "Rejected TAI list". Alternatively, wireless network 120 may provide only a subset of TAIs (broadcast by cell 130) in the "TAI list" (TAIs accepted) while other TAIs to be considered as rejected or not accepted.

FIG. 2 illustrates an example scenario 200 of a conceptual summary of the various proposed schemes in accordance with the present disclosure. Referring to block 210, in general, in case that a satellite-accessing cell (e.g., cell 130) indicates its support for more than one TACs and a UE (e.g., UE 110) selects or otherwise chooses a PLMN, then for the PLMN ID of the chosen PLMN the UE may construct a current TAI list from the PLMN ID of the chosen PLMN as well as TACs received for the PLMN ID on system information broadcasted by the cell. Referring to block 220, in the satellite-access cell the UE may initiate a procedure such as, for example and without limitation, a REGISTRATION procedure, a TRACKING AREA UPDATE procedure, an ATTACH procedure, or a SERVICE REQUEST procedure. The UE may proceed from 220 to 230, 240 or 250, depending on whether the procedure is rejected or accepted. Referring to block 225, a network (e.g., wireless network 120) may reject the procedure only in an event that the network must reject all the TAIs broadcast for the chosen PLMN. In case that the network accepts the procedure, and in case that the network can accept only a subset of Broadcast TAIs for the chosen PLMN while one or more remaining TAIs is/are rejected, the network may provide the UE with one or more TAI lists (e.g., list of accepted TAI(s) (e.g., the TAI list such as, for example, the TAI list specified in 3GPP Technical Specification 24.501, sections 5.3.4, 5.5.1.2.4, and 5.5.1.3.4 i.e., the TAI list that defines the registration area to the UE assigned by the network) and list(s) of rejected TAI(s)).

As shown in block 230, in case that the procedure is rejected and the UE receives a REJECT message containing "rejected TAl" information (list), the rejected TAIs (from the list) may be stored by the UE in a suitable forbidden list (e.g., a forbidden list corresponding to the cause of rejection).

As shown in block 240, in case that the procedure is rejected and the UE receives a REJECT message which does not contain a list of rejected TAIs, then the UE may store all TAIs constructed from the broadcast system information of the cell for the chosen PLMN in the suitable forbidden list.

As shown in block 250, in case that the procedure is accepted by the network and the UE considers some, but not all, TAIs rejected by the network, then the UE may add those rejected TAIs in a corresponding (suitable) forbidden list (e.g., "forbidden tracking areas for regional provision of service" (cause #12) or "forbidden tracking areas for roaming" (cause #13 or #15)).

### Illustrative Implementations

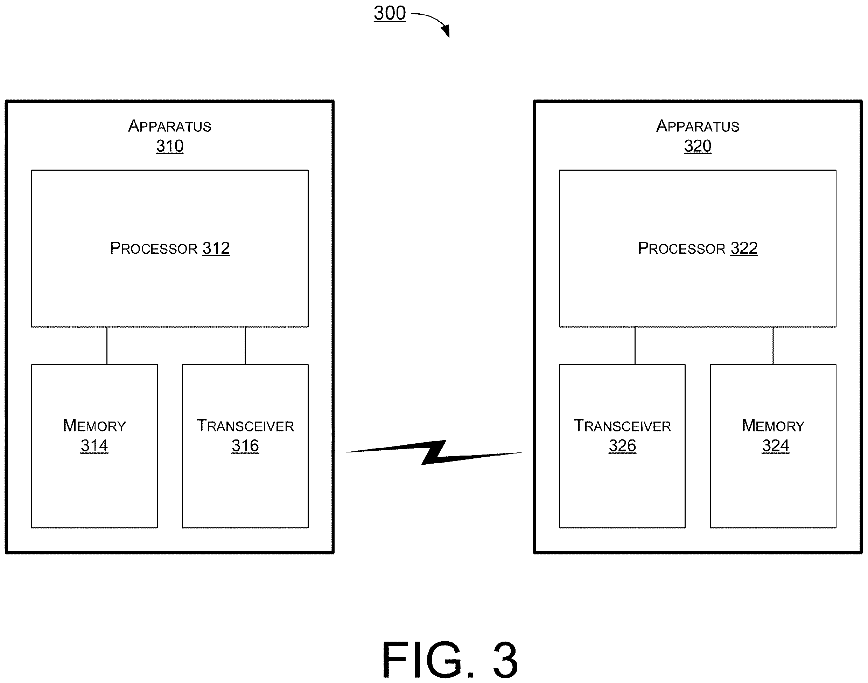

FIG. 3 illustrates an example communication system 300 having at least an example apparatus 310 and an example apparatus 320 in accordance with an implementation of the present disclosure. Each of apparatus 310 and apparatus 320 may perform various functions to implement schemes, techniques, processes and methods described herein pertaining to handling of multiple TAIs in satellite access in mobile communications, including the various schemes described above with respect to various proposed designs, concepts, schemes, systems and methods described above, including network environment 100, as well as processes described below.

Each of apparatus 310 and apparatus 320 may be a part of an electronic apparatus, which may be a network apparatus or a UE (e.g., UE 110), such as a portable or mobile apparatus, a wearable apparatus, a vehicular device or a vehicle, a wireless communication apparatus or a computing apparatus. For instance, each of apparatus 310 and apparatus 320 may be implemented in a smartphone, a smart watch, a personal digital assistant, an electronic control unit (ECU) in a vehicle, a digital camera, or a computing equipment such as a tablet computer, a laptop computer or a notebook computer. Each of apparatus 310 and apparatus 320 may also be a part of a machine type apparatus, which may be an loT apparatus such as an immobile or a stationary apparatus, a home apparatus, a roadside unit (RSU), a wire communication apparatus or a computing apparatus. For instance, each of apparatus 310 and apparatus 320 may be implemented in a smart thermostat, a smart fridge, a smart door lock, a wireless speaker or a home control center. When implemented in or as a network apparatus, apparatus 310 and/or apparatus 320 may be implemented in an eNodeB in an LTE, LTE-Advanced or LTE-Advanced Pro network or in a gNB or TRP in a 5G network, an NR network or an loT network.

In some implementations, each of apparatus 310 and apparatus 320 may be implemented in the form of one or more integrated-circuit (IC) chips such as, for example and without limitation, one or more single-core processors, one or more multi-core processors, one or more complex-instruction-set-computing (CISC) processors, or one or more reduced-instruction-set-computing (RISC) processors. In the various schemes described above, each of apparatus 310 and apparatus 320 may be implemented in or as a network apparatus or a UE. Each of apparatus 310 and apparatus 320 may include at least some of those components shown in FIG. 3 such as a processor 312 and a processor 322, respectively, for example. Each of apparatus 310 and apparatus 320 may further include one or more other components not pertinent to the proposed scheme of the present disclosure (e.g., internal power supply, display device and/or user interface device), and, thus, such component(s) of apparatus 310 and apparatus 320 are neither shown in FIG. 3 nor described below in the interest of simplicity and brevity.

In one aspect, each of processor 312 and processor 322 may be implemented in the form of one or more single-core processors, one or more multi-core processors, or one or more CISC or RISC processors. That is, even though a singular term "a processor" is used herein to refer to processor 312 and processor 322, each of processor 312 and processor 322 may include multiple processors in some implementations and a single processor in other implementations in accordance with the present disclosure. In another aspect, each of processor 312 and processor 322 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 312 and processor 322 is a special-purpose machine specifically designed, arranged and configured to perform specific tasks including those pertaining to handling of multiple TAIs in satellite access in mobile communications in accordance with various implementations of the present disclosure.

In some implementations, apparatus 310 may also include a transceiver 316 coupled to processor 312. Transceiver 316 may be capable of wirelessly transmitting and receiving data. In some implementations, transceiver 316 may be capable of wirelessly communicating with different types of wireless networks of different radio access technologies (RATs). In some implementations, transceiver 316 may be equipped with a plurality of antenna ports (not shown) such as, for example, four antenna ports. That is, transceiver 316 may be equipped with multiple transmit antennas and multiple receive antennas for multiple-input multiple-output (MIMO) wireless communications. In some implementations, apparatus 320 may also include a transceiver 326 coupled to processor 322. Transceiver 326 may include a transceiver capable of wirelessly transmitting and receiving data. In some implementations, transceiver 326 may be capable of wirelessly communicating with different types of UEs/wireless networks of different RATs. In some implementations, transceiver 326 may be equipped with a plurality of antenna ports (not shown) such as, for example, four antenna ports. That is, transceiver 326 may be equipped with multiple transmit antennas and multiple receive antennas for MIMO wireless communications.

In some implementations, apparatus 310 may further include a memory 314 coupled to processor 312 and capable of being accessed by processor 312 and storing data therein. In some implementations, apparatus 320 may further include a memory 324 coupled to processor 322 and capable of being accessed by processor 322 and storing data therein. Each of memory 314 and memory 324 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 314 and memory 324 may include a type of read-only memory (ROM) such as mask ROM, programmable ROM (PROM), erasable programmable ROM (EPROM) and/or electrically erasable programmable ROM (EEPROM). Alternatively, or additionally, each of memory 314 and memory 324 may include a type of non-volatile random-access memory (NVRAM) such as flash memory, solid-state memory, ferroelectric RAM (FeRAM), magnetoresistive RAM (MRAM) and/or phase-change memory. Alternatively, or additionally, each of memory 314 and memory 324 may include a UICC.

Each of apparatus 310 and apparatus 320 may be a communication entity capable of communicating with each other using various proposed schemes in accordance with the present disclosure. For illustrative purposes and without limitation, a description of capabilities of apparatus 310, as a UE (e.g., UE 110), and apparatus 320, as a network node (e.g., network node 125) of a wireless network (e.g., wireless network 120), is provided below.

Under various proposed schemes in accordance with the present disclosure with respect to handling of multiple TAIs in satellite access in mobile communications, processor 312 of apparatus 310, implemented in or as UE 110, may initiate, via transceiver 316, a procedure with a satellite-accessing cell (e.g., cell 130) of a network (e.g., via apparatus 320 as network node 125 of wireless network 120). The procedure may include, for example and without limitation, a REGISTRATION procedure, a TRACKING AREA UPDATE procedure, an ATTACH procedure, or a SERVICE REQUEST procedure. Additionally, processor 312 may construct a TAI of the cell or a plurality of TAls, as a list of TAls, of the cell depending on whether the cell broadcasts (e.g., to indicate support for) one or more than one TACs per PLMN. Moreover, processor 312 may receive, via transceiver 316, either a reject message or an accept message from the network (e.g., via apparatus 320) in response to initiating the procedure.

In some implementations, in constructing, processor 312 may construct the TAI of the cell based on a PLMN ID of a chosen PLMN and a TAC received for the PLMN ID on broadcast system information from the cell in response to the cell not broadcasting more than one TACs for the chosen PLMN. Alternatively, in constructing, processor 312 may construct the list of TAIs of the cell based on the PLMN ID of the chosen PLMN and a plurality of TACs received for the PLMN ID on broadcast system information from the cell in response to the cell broadcasting more than one TACs for the chosen PLMN.

In some implementations, in an event that a reject message is received and the reject message contains a list of one or more rejected TAIs, processor 312 may perform certain operations. For instance, processor 312 may remove the one or more rejected TAIs from a list of accepted TAls (e.g., stored TAI list). Additionally, processor 312 may store the one or more rejected TAls in a forbidden list.

In some implementations, in an event that a reject message is received and the reject message does not contain information of any rejected TAI, processor 312 may store the list of TAls, which are associated with all TACs broadcasted by the cell for a PLMN (e.g., the chosen PLMN) in a forbidden list.

In some implementations, processor 312 may perform additional operations. For instance, processor 312 may determine that one or more TAIs are rejected. Moreover, processor 312 may add the one or more rejected TAIs in a forbidden list corresponding to a cause of rejection.

In some implementations, in an event that aa accept message is received, the accept message may indicate that the network accepts registration to one or more, but not all, TACs for the chosen PLMN. Moreover, the accept message may include an EMM cause IE or a 5GMM IE, that indicates a cause of rejection and includes a list of one or more rejected TAIs. Furthermore, the accept message may also include a new TAI list including one or more TAIs for which registration is successful.

In some implementations, in an event that a reject message is received, processor 312 may perform additional operations. For instance, processor 312 may associate a plurality of TACs to the chosen PLMN. Moreover, processor 312 may store a current list of TAIs constructed for the procedure in a corresponding forbidden list. The plurality of TACs may be indicated in system information broadcasted by the cell for the chosen PLMN. Furthermore, processor 312 may memorize that the current list of TAIs is stored in the corresponding forbidden list for a non-integrity protected NAS reject message in an event that the reject message is not integrity protected. In some implementations, the reject message may include a TRACKING AREA UPDATE REJECT message, an ATTACH REJECT message, a REGISTRATION REJECT message, or a SERVICE REJECT message.

In some implementations, in an event that a reject message is received from the network, the network may reject the procedure in an event that the network rejects all TAIs broadcast for the chosen PLMN.

In some implementations, in an event that an accept message is received from the network, the network may accept the procedure in an event that the network accepts a subset of all TAIs broadcast for the chosen PLMN while the network rejects one or more remaining TAIs. The accept message may include either: (a) a first TAI list listing one or more accepted TAls (e.g., TAI list) and listing one or more rejected TAIs; or (b) a second TAI list listing TAIs accepted by the network (e.g., TAI list) as a subset of TAIs broadcast by the cell while the rest of TAIs broadcast by the cell are considered as not accepted.

### Illustrative Processes

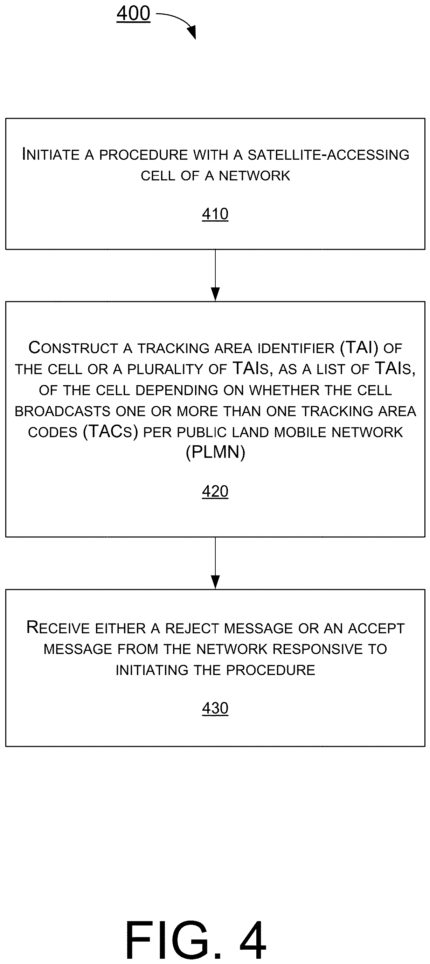

FIG. 4 illustrates an example process 400 in accordance with an implementation of the present disclosure. Process 400 may represent an aspect of implementing various proposed designs, concepts, schemes, systems and methods described above, whether partially or entirely, including those described above. More specifically, process 400 may represent an aspect of the proposed concepts and schemes pertaining to handling of multiple TAIs in satellite access in mobile communications. Process 400 may include one or more operations, actions, or functions as illustrated by one or more of blocks 410, 420 and 430. Although illustrated as discrete blocks, various blocks of process 400 may be divided into additional blocks, combined into fewer blocks, or eliminated, depending on the desired implementation. Moreover, the blocks/sub-blocks of process 400 may be executed in the order shown in FIG. 4 or, alternatively in a different order. Furthermore, one or more of the blocks/sub-blocks of process 400 may be executed iteratively. Process 400 may be implemented by or in apparatus 310 and apparatus 320 as well as any variations thereof. Solely for illustrative purposes and without limiting the scope, process 400 is described below in the context of apparatus 310 as a UE (e.g., UE 110) and apparatus 320 as a communication entity such as a network node or base station (e.g., network node 125) of a network (e.g., wireless network 120). Process 400 may begin at block 410.

At 410, process 400 may involve processor 312 of apparatus 310, implemented in or as UE 110, initiating, via transceiver 316, a procedure with a satellite-accessing cell (e.g., cell 130) of a network (e.g., via apparatus 320 as network node 125 of wireless network 120). The procedure may include, for example and without limitation, a REGISTRATION procedure, a TRACKING AREA UPDATE procedure, an ATTACH procedure, or a SERVICE REQUEST procedure. Process 400 may proceed from 410 to 420.

At 420, process 400 may involve processor 312 constructing a TAI of the cell or a plurality of TAIS, as a list of TAIs, of the cell depending on whether the cell broadcasts one or more than one TACs per PLMN. Process 400 may proceed from 420 to 430.

At 430, process 400 may involve processor 312 receiving, via transceiver 316, either a reject message or an accept message from the network (e.g., via apparatus 320) in response to initiating the procedure.

In some implementations, in constructing, process 400 may involve processor 312 constructing the TAI of the cell based on a PLMN ID of a chosen PLMN and a TAC received for the PLMN ID on broadcast system information from the cell in response to the cell not broadcasting more than one TACs for the chosen PLMN. Alternatively, in constructing, process 400 may involve processor 312 constructing the list of TAts of the cell based on the PLMN ID of the chosen PLMN and a plurality of TACs received for the PLMN ID on broadcast system information from the cell in response to the cell broadcasting more than one TACs for the chosen PLMN.

In some implementations, in an event that a reject message is received and the reject message contains a list of one or more rejected TAIs, process 400 may involve processor 312 performing certain operations. For instance, process 400 may involve processor 312 removing the one or more rejected TAls from a list of accepted TAls (e.g., from the stored TAI list). Additionally, process 400 may involve processor 312 storing the one or more rejected TAls in a forbidden list.

In some implementations, in an event that a reject message is received and the reject message does not contain information of any rejected TAI, process 400 may involve processor 312 storing the list of TAls, which are associated with all TACs broadcasted by the cell for a PLMN (e.g., the chosen PLMN) in a forbidden list.

In some implementations, process 400 may involve processor 312 performing additional operations. For instance, process 400 may involve processor 312 determining that one or more TAIs are rejected. Moreover, process 400 may involve processor 312 adding the one or more rejected TAls in a forbidden list corresponding to a cause of rejection.

In some implementations, in an event that a accept message is received, the accept message may indicate that the network accepts registration to one or more, but not all, TACs for the chosen PLMN. Moreover, the accept message may include an EMM cause IE or a 5GMM IE, that indicates a cause of rejection and includes a list of one or more rejected TAIs. Furthermore, the accept message may also include a new TAI list including one or more TAIs for which registration is successful.

In some implementations, in an event that a reject message is received, process 400 may involve processor 312 performing additional operations. For instance, process 400 may involve processor 312 associating a plurality of TACs to the chosen PLMN. Moreover, process 400 may involve processor 312 storing a current list of TAIs constructed for the procedure in a corresponding forbidden list. The plurality of TACs may be indicated in system information broadcasted by the cell for the chosen PLMN. Furthermore, process 400 may involve processor 312 memorizing that the current list of TAIs is stored in the corresponding forbidden list for a non-integrity protected NAS reject message in an event that the reject message is not integrity protected. In some implementations, the reject message may include a TRACKING AREA UPDATE REJECT message, an ATTACH REJECT message, a REGISTRATION REJECT message, or a SERVICE REJECT message.

In some implementations, in an event that a reject message is received from the network, the network may reject the procedure in an event that the network rejects all TAIs broadcast for the chosen PLMN.

In some implementations, in an event that an accept message is received from the network, the network may accept the procedure in an event that the network accepts a subset of all TAIs broadcast for the chosen PLMN while the network rejects one or more remaining TAIs. The accept message may include either: (a) a first TAI list listing one or more accepted TAls (e.g., TAI list) and listing one or more rejected TAIs; or (b) a second TAI list listing TAIs accepted by the network as a subset of TAIs broadcast by the cell while other TAls broadcast by the cell are considered as not accepted.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:
initiating, by a processor of a user equipment, in the following also referred to as UE, a procedure with a satellite-accessing cell of a network (410; 220); and
constructing, by the processor, a tracking area identifier, in the following also referred to as TAI, of the cell or a plurality of TAls, as a list of TAls, of the cell depending on whether the cell broadcasts one or more than one tracking area codes, in the following also referred to as TACs, per public land mobile network, in the following also referred to as PLMN, (420; 230, 240, 250).

2. The method of Claim 1, wherein the constructing comprises constructing the TAI of the cell based on a PLMN identifier, in the following also referred to as ID, of a chosen PLMN and a TAC received for the PLMN ID on broadcast system information from the cell in response to the cell not broadcasting more than one TACs for the chosen PLMN; and/or
wherein the constructing comprises constructing the plurality of TAIs of the cell based on a PLMN ID of a chosen PLMN and a plurality of TACs received for the PLMN ID on broadcast system information from the cell in response to the cell broadcasting more than one TACs for the chosen PLMN.

3. The method of Claim 1 or 2, wherein the procedure comprises a REGISTRATION procedure, a TRACKING AREA UPDATE procedure, an ATTACH procedure, or a SERVICE REQUEST procedure.

4. The method of any one of Claims 1 to 3, further comprising:
receiving, by the processor, a reject message responsive to initiating the procedure (430; 230), the reject message containing a list of one or more rejected TAIs, and
storing, by the processor, the one or more rejected TAIs in a forbidden list (230); and/or
further comprising:
receiving, by the processor, a reject message from the network responsive to initiating the procedure, the reject message not containing information of any rejected TAI (430; 240), and
storing, by the processor, the list of TAIs, which are associated with all TACs broadcasted by the cell for a PLMN, in a forbidden list (240).

5. The method of any one of Claims 1 to 4, further comprising:
determining, by the processor, that one or more TAIs are rejected;
adding, by the processor, the one or more rejected TAIs in a forbidden list corresponding to a cause of rejection.

6. The method of any one of Claims 1 to 5, further comprising:
receiving, by the processor, an accept message from the network responsive to initiating the procedure (430; 250),
wherein the accept message indicates that the network accepts registration to one or more, but not all, TACs for a chosen PLMN,
wherein the accept message includes an Evolved Packet System, in the following also referred to as EPS, Mobility Management, in the following also referred to as EMM, cause information element, in the following also referred to as IE, or a 5th Generation Mobility Management, in the following also referred to as 5GMM, IE, that indicates a cause of rejection and includes a list of one or more rejected TAIs, and
wherein the accept message further includes a new TAI list including one or more TAIs for which registration is successful.

7. The method of any one of Claims 1 to 6, further comprising:
receiving, by the processor, a reject message from the network responsive to initiating the procedure (430; 240),
associating, by the processor, a plurality of TACs to a chosen PLMN, and
storing, by the processor, a current list of TAIs constructed for the procedure in a corresponding forbidden list,
wherein the plurality of TACs are indicated in system information broadcasted by the cell for the chosen PLMN; and
preferably further comprising:
memorizing, by the processor, that the current list of TAIs is stored in the corresponding forbidden list for a non-integrity protected non-access stratum, in the following also referred to as NAS, reject message in an event that the reject message is not integrity protected.

8. The method of Claim 7, wherein the reject message comprises a TRACKING AREA UPDATE REJECT message, an ATTACH REJECT message, a REGISTRATION REJECT message, or a SERVICE REJECT message.

9. The method of any one of Claims 1 to 8, further comprising:
receiving, by the processor, a reject message from the network responsive to initiating the procedure (430; 230, 240),
wherein the network rejects the procedure in an event that the network rejects all TAIs broadcast for a chosen PLMN, (225); and/or
further comprising:
receiving, by the processor, an accept message from the network responsive to initiating the procedure (430; 250),
wherein the network accepts the procedure in an event that the network accepts a subset of all TAIs broadcast for a chosen public land mobile network (PLMN) while the network rejects one or more remaining TAIs (225), and
wherein the accept message includes either:
a first TAI list listing one or more accepted TAIs and listing one or more rejected TAIs, or
a second TAI list listing TAIs accepted by the network as a subset of TAIs broadcast by the cell.

10. An apparatus (310) implementable in a user equipment, in the following also referred to as UE, comprising:
a transceiver (316) configured to communicate wirelessly with a network; and
a processor (312) coupled to the transceiver (316) and configured to perform operations comprising:
initiating, via the transceiver (316), a procedure with a satellite-accessing cell of the network;
constructing a tracking area identifier, in the following also referred to as TAI, of the cell based on a public land mobile network, in the following also referred to as PLMN, identifier, in the following also referred to as ID, of the chosen PLMN and a TAC received for the PLMN ID on a broadcast system information from the cell in response to determining the cell broadcasts one tracking area code, in the following also referred to as TAC, per PLMN or constructing a plurality of TAIs, as a list of TAls, of the cell based on a PLMN ID of the chosen PLMN and a TAC received for the PLMN ID on a broadcast system information from the cell in response to determining the cell broadcasts more than one TACs per PLMN; and
receiving, via the transceiver (316), either a reject message or an accept message from the network responsive to initiating the procedure.

11. The apparatus (310) of Claim 10, wherein, responsive to receiving the reject message with the reject message containing a list of one or more rejected TAls, the processor (312) is further configured to perform operations comprising:
storing the one or more rejected TAIs in a corresponding forbidden list.

12. The apparatus (310) of Claim 10 or 11, wherein the processor (312) is further configured to perform operations comprising:
determining that one or more TAIs are rejected; and
adding the one or more rejected TAIs in a forbidden list corresponding to a cause of rejection.

13. The apparatus (310) of any one of Claims 10 to 12, wherein, responsive to receiving the accept message, the processor (312) is further configured to determine that
the accept message indicates that the network accepts registration to one or more, but not all, TACs for a chosen PLMN,
the accept message includes a list of one or more rejected TAIs, and the accept message further includes a new TAI list including one or more TAIs for which registration is successful; and/or
wherein, responsive to receiving the accept message, the processor (312) is further configured to determine that the accept message indicates that the network accepts registration to one or more, but not all, TACs for a chosen PLMN, and wherein the accept message includes an Evolved Packet System, in the following also referred to as EPS, Mobility Management, in the following also referred to as EMM, cause information element, in the following also referred to as IE, or a 5th Generation Mobility Management, in the following also referred to as 5GMM, IE, that indicates a cause of rejection.

14. The apparatus (310) of any one of Claims 10 to 13, wherein, responsive to receiving the reject message, the processor (312) is further configured to perform operations comprising:
associating a plurality of TACs to a chosen PLMN; and
storing a current list of TAIs constructed for the procedure in a corresponding forbidden list,
wherein the plurality of TACs are indicated in system information broadcasted by the cell for the chosen PLMN.

15. The apparatus (310) of Claim 14, wherein the processor (312) is further configured to perform operations comprising:
memorizing that the current list of TAIs is stored in the corresponding forbidden list for a non-integrity protected non-access stratum, in the following also referred to as NAS, reject message in an event that the reject message is not integrity protected.
